# EUROPEAN PATENT APPLICATION

(11) **EP 4 844 628 A1**
(43) Date of publication of application: **25.11.2026**
(21) Application number: 25178006.0
(22) Date of filing: 21.05.2025
(51) Int. Cl.: G06K 7/10, G06K 19/07, H04B 5/26, H04B 5/40

(54) **INTEGRATED CIRCUITS CAPABLE TO PERFORM CONTACTLESS COMMUNICATIONS BOTH IN ACTIVE MODE AND PASSIVE MODE, AND CORRESPONDING METHOD**

(71) Applicant: STMicroelectronics International N.V., 1228 Plan-les-Ouates, Geneva (CH)
(72) Inventor: PEVEC, Albin, Ljubljana (SI); ROZMAN, Jernej, Ravne na Koroskem (SI); KOROSAK, Ziga, Cerklje na Gorenjskem (SI); SUHADOLNIK, Nejc, Preserje (SI); KUNC, Vinko, Ljubljana (SI)
(74) Representative: Casalonga

(57) **Abstract**

The contactless communication system (SYS) comprises a front-end circuit (AFE) capable to operate either in an active mode and in a passive mode, the system including:
- a tank circuit (LCTK) including an antenna coil (LANT) and serial capacitors (CS0, CS1) in series between first nodes (AC0_TX, AC1_TX) and second nodes (ACO, AC1) on the antenna coil terminals;
- a transmission stage (TX) coupled on the first nodes (AC0_TX, AC1_TX) and configured to leave the voltage floating on the first nodes in passive mode, and a reception stage (RX) coupled on the second nodes (ACO, AC1);
- a passive mode start-up circuit (STUP) including a switching circuit (T0, T1, T01) capable, in a commuted state, to settle the voltage on the first nodes (AC0_TX, AC1_TX), and a charge pump circuit (CP) configured to elevate the voltage from the second nodes (ACO, AC1) up to a control voltage (VCP) controlling the switching circuit to the commuted state.

## Description

Embodiments are related to integrated circuits, in particular integrated circuits capable to perform contactless communications both in active mode and passive mode.

Contactless communications, such as communications according to the technology called "Near Field Communication", usually "NFC", and according to the technology called "Radio Frequency IDentification", usually "RFID", are wireless connectivity technologies which allow communication over a short distance between electronic devices, such as for example between contactless integrated circuit cards or tags and readers.

NFC technology is an open technological platform, standardised in ISO-14443, EMVCo, NFC-forum standards but incorporate other already existing compatible communication standards. RFID technology is in particular standardised by the ISO-18092 standard and also incorporates other already existing compatible communication standards.

Contactless communications are performed by magnetic coupling between antennas (coils) of a reader device and a transponder device, such as a computer device, or an NFC or RFID tag (or card) or a device emulated in card mode.

When transmitting information between a reader and a transponder, the reader generates a magnetic field which is typically a sine wave (called the carrier, or carrier signal) at 13.56MHz.

Amplitude modulation of the carrier generated by the reader permits to transmit information between the reader to the transponder. The frequency of these modulations corresponds to a subcarrier of said carrier. The frequency of this sub-carrier depends on the communication protocol used and may for example be equal to 848 kHz.

Two operating modes are then possible, a passive mode or an active mode.

In the passive mode, called "PLM" for passive load modulation, the passive transponder has no power supply and uses the energy transmitted by the magnetic field of the carrier signal (called "RF power") to power its electronic circuit. The passive transponder retro-modulates the carrier signal coming from the reader to transmit information by modulating a load at its antenna.

Powering tag and communication by load modulation requires a relatively high coupling factor between reader and tag coils. When the coupling factor is too low (e.g. when the tag antenna is small), providing power to the tag may become problematic, and even if induced power is still sufficient load modulation may not create enough signal to be detected by the reader.

In the active mode, called "ALM" for active load modulation, the reader and the active transponder both generate an electromagnetic field. This operating mode thus needs that the active transponder has its own power source, for example a battery.

Recently has appeared a need for contactless devices, which, in addition to operate active load modulation ALM, would also operate passive load modulation PLM, passively supplied without using internal power supply.

A difficulty encountered in the design of a transponder capable to support both passive mode and active mode, can be found in the impedance matching circuit of the transponder's antenna (also called "antenna tank") which has a resonant frequency that unfavourably changes when in passive mode compared to when in active mode.

A typical target for the antenna tank is to provide a resonant frequency set to the frequency "Fc" of the carrier signal (for instance Fc=13.56 MHz in NFC or RFID), in particular to induce more signal during reception, and also to profit of a lower transmission current consumption.

Another typical target for the antenna tank is to provide a "reasonable" or "not too high" quality factor "Q factor" in order to keep a moderate the settling time of the ALM signal while providing a efficient resonating effect. In this purpose, a typically "reasonable" Q factor is set between 2.5 and 7.5, e.g. to 5.

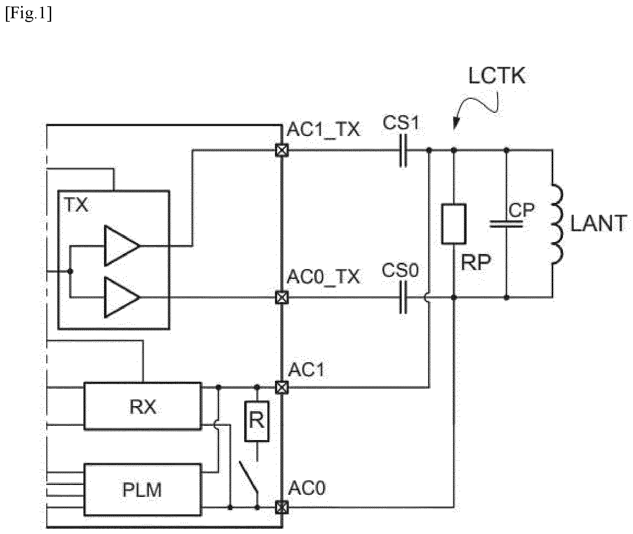

We quickly refer to figure 1.

Figure 1 illustrates a front-end circuit coupled to an antenna tank LCTK including capacitors CS0, CS1, CP, a resistor RP, and the antenna coil LANT, which basically defines the resonant frequency and the quality factor "Q factor" of the tank LCTK.

The antenna tank LCTK is driven through pins AC1_TX and AC0_TX by active transmitter TX to perform ALM (in transmission phase). Pins AC1 and AC0 are inputs to the active receiver RX. When ALM signal is not generated (e.g. in reception phases) pins AC1_TX and AC0_TX can be connected either to ground or to positive supply by the TX driver. Thus, the resonant frequency of the antenna tank LCTK does not vary and must be set at the carrier frequency.

However, when the TX driver is not supplied in passive mode, the pins AC1_TX and AC0_TX are therefore left floating and the capacitors CS1 and CS0 do not contribute to resonant frequency of the antenna tank LCTK. This means that resonant frequency is not the same in passive mode. Hence, the low retrieved RF power may become insufficient to power the integrated circuit, or at least the load modulation may not create enough signal to be detected by the reader.

A classical solution is to set the resonance frequency of the antenna tank LCTK at Fc in passive mode when the pins AC1_TX and AC0_TX are left floating, in order to profit on the resonance's amplification in passive mode and during reception phase.

However, this type of solution is not fully satisfactory because in active mode, when generating ALM, the resonant frequency is drifted away from Fc because of the contribution of capacitors CS1 and CS0. A resistor R is switched-on between AC0 and AC1 to reduce the Q factor of antenna tank LCTK practically to 1, in order to prevent undesired ringing of antenna tank LCTK at the drifted resonant frequency.

In consequence, in active mode, generating the ALM consumes much more power (for the same output modulation) or the modulation is significantly smaller (for the same consumption) compared to application in which the antenna tank LCTK has its resonant frequency at Fc.

Thus, there is a need to provide front end circuits capable of operating in full capability in both active mode and passive mode.

Embodiments and implementation defined hereinafter introduce a contactless communication integrated circuit and method, supporting an active operating mode supplied by an internal supply source and communicating by active load modulation, and a passive operating mode extracting power from the electromagnetic field on its antenna and communicating by passive load modulation.

The embodiments and implementations use a charge pump circuit to provide a voltage capable of controlling a switch circuit to short the antenna transmission driver pins in passive mode, in such a manner that the antenna tank circuit has the same resonant frequency in passive mode as in active mode. The resonant frequency is thus advantageously set on the carrier frequency in active mode, while the charge pump circuit elevates the voltage retrieved with unmatched resonant frequency.

Such embodiments cause fully efficient operations in passive mode, and in active mode lower power consumption (lower supply voltage and lower current), or significantly larger active load modulation, or a trade-off between consumption and performance in active mode.

According to an aspect, it is thus proposed a contactless communication system comprising a front-end circuit capable to operate either in an active mode or in a passive mode, the front-end circuit including:
- a tank circuit including an antenna coil and serial capacitors in series between first nodes and second nodes on the antenna coil terminals;
- a transmission stage coupled on the first nodes and configured to leave the voltage floating on the first nodes in passive mode, and a reception stage coupled on the second nodes;
- a passive mode start-up circuit including a switching circuit capable, in a commuted state, to settle the voltage on the first nodes, and a charge pump circuit configured to elevate the voltage from the second nodes up to a control voltage controlling the switching circuit to the commuted state.

According to an embodiment, the tank circuit includes in addition a parallel capacitor parallelly coupled on the antenna coil terminals, the capacitance values of each serial capacitors representing a part less or equal than 50% of the capacitance involving the value of tuned frequency.

According to an embodiment, the tank circuit is configured in a tuned state resonating at a tuned frequency when the voltage on the first nodes is settled and not left floating; and configured in a detuned state resonating at a detuned frequency when the voltage on the first nodes is left floating and not settled.

According to an embodiment, the tuned frequency is a carrier frequency of a contactless communication, and the detuned frequency is less than 50% different than the tuned frequency

According to an embodiment, the reception stage is capable to generate a passive mode supply voltage from an external source retrieved on the second nodes, if the tank circuit is in the tuned state.

According to an embodiment, passive mode start-up circuit is configured to enable the charge pump circuit operation during a start-up period in passive mode when the tank circuit is in the detuned state and during the passive mode operation to maintain the switching circuit in the commuted state, and to disable the charge pump circuit operations in active mode.

According to an embodiment, the passive mode start-up circuit includes native MOS transistors in the switching circuit or in the charge pump circuit.

According to another example of embodiment:
- in the active mode, the front end circuit is configured to generate an active mode supply voltage from an internal power source, adapted to supply the transmission stage and the reception stage, the transmission stage configured to generate an active load modulation output signal on the first nodes, the reception stage configured to receive an input signal on the second nodes;
- in the passive mode, the front end circuit is capable to generate a passive mode supply voltage from an external power source retrieved on the second nodes, adapted to supply the reception stage configured to receive an input signal on the second nodes and to perform a passive load modulation on the second nodes.

It is also proposed a transponder device, including a contactless communication system according to one of the embodiments defined above.

According to another aspect, it is proposed a contactless communication method operating a front-end circuit either in an active mode or in a passive mode, the front end circuit including a tank circuit including an antenna coil and serial capacitors in series between first nodes and second nodes on the antenna coil terminals, a transmission stage coupled on the first nodes and a reception stage coupled on the second nodes;
the method comprising:
- leaving the voltage floating on the first nodes in passive mode;
- a passive mode start-up procedure including elevating the voltage from the second nodes, with a charge pump circuit, up to a control voltage controlling a switching circuit in a commuted state that settles the voltage on the first nodes.

According to an implementation, the tank circuit includes in addition a parallel capacitor parallelly coupled on the antenna coil terminals, the capacitance values of each serial capacitors representing a part less or equal than 50% of the capacitance involving the value of tuned frequency.

According to an implementation, when the voltage on the first nodes is settled and not left floating, the tank circuit is in a tuned state and resonates at a tuned frequency; and, when the voltage on the first nodes is left floating and not settled, the tank circuit is in a detuned state and resonates at a detuned frequency.

According to an implementation, the tuned frequency is a carrier frequency of the contactless communication, and the detuned frequency is less than 50% different than the tuned frequency.

According to an implementation, a passive mode supply voltage is generated by the reception stage from an external source retrieved on the second nodes, if the tank circuit is in the tuned state.

According to an implementation, the passive mode start-up procedure enables the charge pump to operate during a start-up period in passive mode when the tank circuit is in the detuned state and during the passive mode operation to maintain the switching circuit in the commuted state, and disables the charge pump to operate in active mode.

According to an implementation, native MOS transistors are used in the switching circuit or in the charge pump circuit.

According to another example of implementation:
- in the active mode, an active mode supply voltage is generated from an internal power source, supplying the transmission stage and the reception stage, the transmission stage generating an active load modulation output signal on the first nodes, the reception stage receiving an input signal on the second nodes;
- in the passive mode, a passive mode supply voltage is generated from an external power source retrieved on the second nodes, supplying the reception stage receiving an input signal on the second nodes and performing a passive load modulation on the second nodes.

Other features and advantages of the present invention will appear when examining the following detailed description, only providing non-limiting example of embodiments and implementations, with reference to the annexed drawings in which:
[Fig.1] previously described, illustrates a front-end circuit for contactless communication ;
[Fig.2] and
[Fig.3] and
[Fig.4] and
[Fig.5] illustrate embodiments and implementations of the invention.

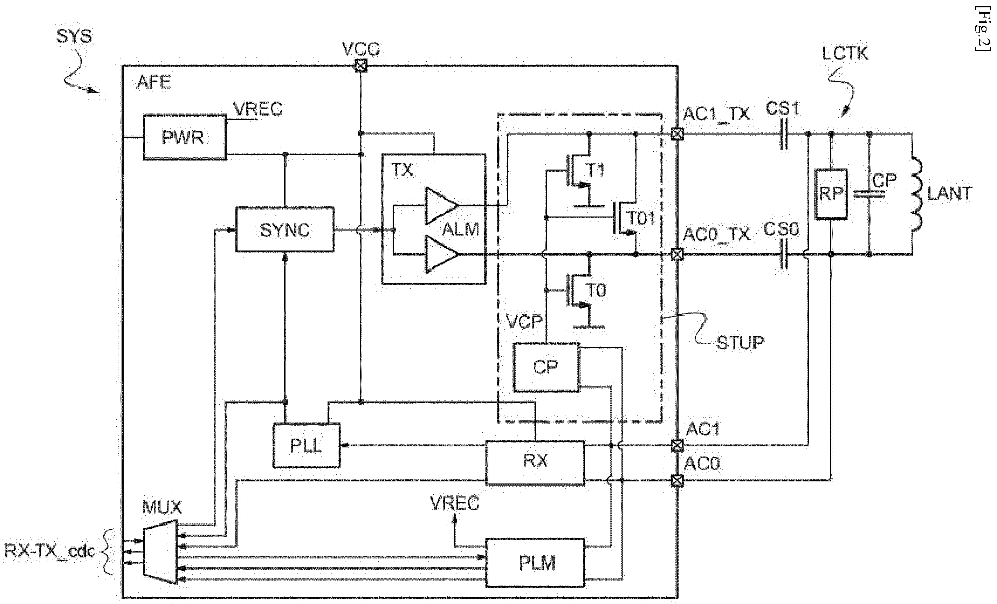

Figure 2 schematically illustrates a front-end circuit AFE of a contactless communication system SYS, for instance embodied in an integrated circuit such as a system on chip.

The front-end circuit AFE is configured to perform contactless communications, such as "NFC" (which stands for "Near Field Communication"), and/or according to ISO14443 TypeA standard, and/or ISO14443 TypeB standard, and/or ISO15693 standard, and/or JIS.X.6319. Contactless communications are also referred by the RFID technology (stranding for "Radio Frequency Identification") which is in particular standardised by the ISO-18092 and also incorporates other already existing compatible communication standards.

The system SYS and its front-end circuit AFE, in this regard, can be configured to operate at 13.56 MHz for communicating by magnetic coupling between a reader coil and a transponder coil.

The front-end circuit AFE, is advantageously capable to perform contactless communication as a 100% operational active transponder and as a 100% operational passive transponder.

Active transponders, such as a smartphone or a connected device, benefit from an internal power source to supply their operations. The active transponder communicates to the reader by performing active load modulation, by generating a signal emitted on the antenna.

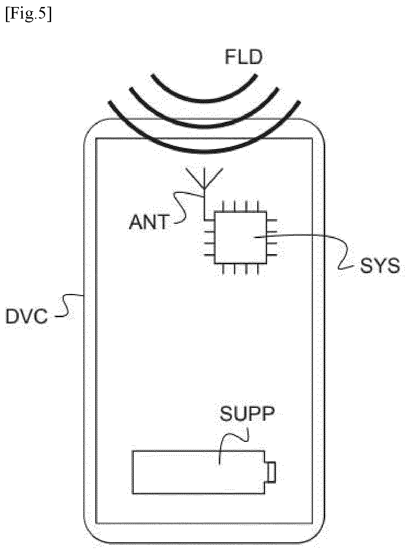

Passive transponders, also called "tags" such as a bank or public transport card, supply their operations by retrieving the energy conveyed by the electromagnetic field FLD (cf. Fig.5) generated by the reader. The passive transponder communicates to the reader by performing passive load modulation by inductive coupling.

The system includes an antenna tank circuit LCTK coupled to the front-end circuit AFE. The tank circuit LCTK includes an antenna coil LANT and serial capacitors CS0, CS1 in series between first nodes AC0_TX, AC1_TX and second nodes AC0, AC1 on the antenna coil LANT terminals. In addition, the tank circuit LCTK may include a parallel capacitor CP and a parallel resistor RP coupled in parallel to the antenna coil LANT (also on the second nodes AC0, AC1).

The tank circuit LCTK is advantageously configured to be in a tuned state when the voltage on the first nodes AC0_TX, AC1_TX is settled, for instance to a reference supply or ground voltage, and thus not left floating. When in tuned state, the tank circuit LCTK resonates at a tuned frequency. For instance, the tuned frequency is the carrier frequency Fc of the contactless communication (e.g. 13.56 MHz).

In conjunction, the tank circuit LCTK is configured to be in a detuned state when the voltage on the first nodes AC0_TX, AC1_TX is left floating and not settled to a reference voltage. When in detuned state, the tank circuit LCTK resonates at a detuned frequency, i.e. a frequency that is not the tuned frequency. For instance, the detuned frequency is less than 50%, for example about 20%, different than the tuned frequency.

The resonant frequency of the antenna tank LCTK is in first order defined by the inductance (also expressed "LANT") of the antenna LANT and the capacitances (also expressed "CP, CS1 and CS0") of the capacitors CP, CS1 and CS0. Considering that capacitances CS1=CS0=CS, the equivalent capacitor parallel to antenna coil is CP+CS/2.

Advantageously, the contribution CS/2 of each serial capacitor CS0, CS1 in the total capacitance value represents a part less or equal than 50%, for instance about 20%, of the capacitance involving the value of tuned frequency (e.g. the first order equivalent parallel capacitor CP+CS/2).

The capacitances values of capacitors CP and CS are thus preferably set, with respect to the antenna coil inductance LANT, such as the resonant frequency of the tank LCTK in the tuned state, i.e. the tuned frequency, is at the same frequency as the reader carrier frequency Fc (Fc=13.56 MHz).

In addition, the capacitances values of CP and CS are preferably set, with respect to the antenna coil inductance LANT, and to the parallel resistor's resistance Rp, such as the Q factor of the tank LCTK is set between 2.5 to 7.5, e.g. Q=5.

The front-end circuit AFE includes a transmission stage TX coupled on the first nodes AC0_TX, AC1_TX, a reception stage RX coupled on the second nodes AC0, AC1, and an advantageous passive mode start-up circuit STUP.

In this example, some conventional units are represented, such as a power management unit PWR, a synchronizer SYNC, a phase locked loop PLL, a passive load modulation circuit PLM, and an interface MUX that brings and dispatches signals RX- TX_cdc exchanged with upstream components of the system SYS.

In active mode, the transmission stage TX is capable to generate the signals that performs the active load modulation ALM on the first nodes AC0_TX, AC1_TX, in particular thanks to an active mode supply voltage VCC (also called hereinafter: "internal voltage" VCC).

The internal voltage VCC is provided to the system SYS on a supply pin (indistinctively referred by VCC). The internal voltage VCC may be provided by a source of energy SUPP (cf. Fig.5) which can be considered either internal or external to the system SYS.

During the active mode, the internal supply voltage VCC may supply the reception stage RX, the phase locked loop PLL and the synchronizer SYNC, and also the entire system SYS, through the power management unit PWR.

Basically, those elements of the front-end circuit AFE function as follows: the phase locked loop PLL generating a reference signal having its phase and frequency locked (i.e. invariant) on the carrier's signal phase and frequency, received by the reception stage RX at its input on the second nodes AC0, AC1. The synchronizer SYNC is fed by the reference signal and data received on the interface MUX and generates the active load modulation ALM driving signal, by modulating the reference signal as the carrier signal, with a subcarrier signal translating the data according to the used communication protocol. This driving signal is inputted to the transmission driver TX that amplifies it to generate the active load modulation ALM electromagnetic field through the antenna coil LANT.

In active mode, when active load modulation signal ALM is not generated (e.g. during reception of data and during preparation of the transmission frame) the first nodes AC0_TX, AC1_TX are internally connected either to ground or to the positive internal supply VCC by the transmission stage TX output.

Thus, in active mode, the resonant frequency of the antenna LC tank is always the same, constantly at the tuned frequency Fc (basically because de serial capacitors CS0, CS1 are kept contributing to the resonant frequency of the tank LCTK).

In passive mode, the internal voltage VCC is not supplied to the transmission stage TX; the internal voltage VCC may potentially not be supplied to the entire system SYS at all (for instance in case of an exhausted energy source SUPP).

Consequently, the transmission stage TX can't drive the first nodes AC0_TX, AC1_TX to a settled voltage, thus the transmission stage TX is unable to settle the voltage on the first nodes AC0_TX, AC1_TX, and the transmission stage TX leaves the voltage floating on the first nodes AC0_TX, AC1_TX.

In passive mode, the reception stage RX may be capable to generate a passive mode supply voltage VREC, if the signal induced on the second nodes AC1, AC0 is high enough to generate a rectified (passive mode) supply voltage VREC, which can be used to supply the system SYS through the power management unit PWR.

In passive mode, the front-end circuit AFE may be capable to supply the reception stage RX to receive an input signal on the second nodes AC0, AC1 and to perform a passive load modulation PLM on the second nodes AC0, AC1.

The passive mode supply voltage VREC retrieved on the second nodes AC1, AC0 is thus generated from the electromagnetic field FLD (cf. fig.5) received from the reader as an external source of energy.

In particular, the signal induced on the second nodes AC1, AC0 is high enough for the reception stage RX to generate a rectified (passive mode) supply voltage VREC, if the tank circuit LCTK is in the tuned state.

However, such passive mode supply voltage VREC are typically unable, or at least are not designed to be able, to supply operatively the transmission stage TX.

In consequence, when in passive mode, the voltage on the first nodes AC0_TX, AC1_TX may be left floating and not settled, and the tank circuit LCTK is configured in the detuned state, at least during the beginning of a passive mode stat-up procedure (STUP).

The passive mode start-up procedure is performed by a passive mode start-up circuit STUP including a switching circuit T0, T1, T01 and a charge pump circuit CP.

The switching circuit T0, T1, T01 capable, in a commuted state, to settle the voltage on the first nodes AC0_TX, AC1_TX.

For instance, the switching circuit includes switch devices, typically MOS transistors (typical abbreviation for the widespread "Metal Oxide Semiconductor" technology), including a first switch T0 capable of connecting a first node AC0_TX to the ground, a second switch T1 capable of connecting the other first node AC1_TX to the ground, a third switch T01 capable of shorting the first nodes AC0_TX, AC1_TX (i.e. connecting together both of the first nodes AC0_TX, AC1_TX).

This is an advantageous solution mainly using the third switch T01 and the first and second switches T0 and T1 as support.

In an alternative solution, the third switch T01 could be used alone without the first and second switches T0 and T1; and in another alternative solution, only first and second switches T0 and T1 could be used together without the third switch T01.

In the beginning of the passive mode start-up phase, the antenna tank circuit LCTK is in the detuned state and inefficiently retrieves the voltage on the second nodes AC0, AC1 induced by the electromagnetic field FLD (cf. Fig.5) received by the antenna LANT.

The charge pump circuit CP is configured to elevate the voltage retrieved on the second nodes AC0, AC1 up to a control voltage VCP sufficiently high for controlling the switching circuit T0, T1, T01 to the commuted state.

In other words, at the beginning of passive mode, the front-end circuit starts with the first nodes AC1_TX, AC2_TX in free state, i.e. in floating voltage, so the serial capacitance CS/2 of the serial capacitors CS0, CS1 does not contribute to the resonant frequency of the antenna tank LCTK, defined by the parallel capacitance CP only.

As the serial capacitance CS/2 represents a small part of resonant capacitor, the untuned resonant frequency of antenna tank LCTK is configured to be close enough to the carrier frequency Fc to still have a little amplitude increase due resonant effect. For this purpose, the detuned frequency may be designed to be less than 50%, for example about 20%, different than the carrier frequency Fc.

When the peak voltage of induced signal on second nodes AC0, AC1 is above the threshold of threshold element used in the charge pump CP, the elevated voltage VCP starts to rise.

When the output of charge pump (elevated voltage) VCP is above the threshold voltage of switching elements T0, T1 and T01, the switching circuit is set in the commuted state.

When in commuted state, the switch circuit settles the voltage on the first nodes AC0_TX, AC1_TX not left floating anymore.

When in commuted state, the switch circuit shorts and optionally grounds the first nodes AC0_TX, AC1_TX CS1 so the serial capacitors CS0, CS1 appears connected in parallel to CP and to the coil LANT. The antenna tank LCTK is thus set in the tuned state, having its resonant frequency defined by CP, CS1 and CS0 at the tuned resonant frequency, designed to equate the carrier frequency Fc.

As the tuned resonant frequency of antenna tank LCTK is configured to be precisely aligned on the carrier frequency Fc, a strong amplitude increase is provided by the resonant effect.

In consequence, the passive load modulation circuit PLM is capable to generate the rectified passive mode voltage VREC supplying the system SYS.

Advantageously, the passive mode start-up circuit STUP is configured to enable the charge pump circuit CP operations during a start-up period, at the beginning of passive mode, while the tank circuit LCTK is in the detuned state. The charge pump circuit CP can remain enabled when the tank circuit LCTK is in tuned state (in order to maintain this voltage during operations in passive mode).

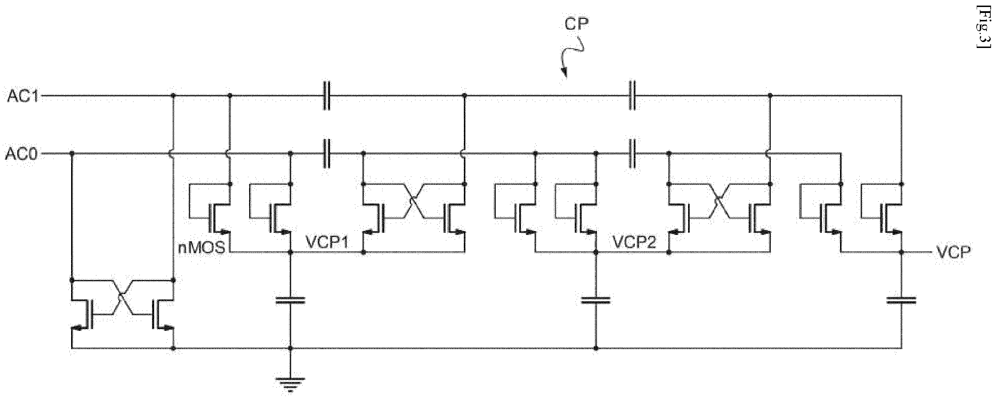

Figure 3 schematically illustrates an example embodiment of the charge pump circuit CP, included in the front-end circuit AFE described above.

This charge pump circuit includes threshold element nMOS, and capacitive elements. The threshold element are advantageously low threshold elements. The low threshold elements may have a threshold value below 1 V. The low threshold elements may be embodied by Shottky diodes, or by diode-connected MOS transistors, advantageously native MOS transistor.

A native MOS transistor may have a nearly zero threshold voltage and is basically manufactured on the "native" slightly p-doped silicon substrate (whereas a non-native N-channel MOS transistors are manufactured on a p-well, which has a higher concentration of positive charges). The lower concentration of positive charges to repel in a native MOS transistor to form a depletion region means that less voltage at the gate region is required to involve the conducting channel.

This charge pump circuit CP starts to operate when the peak amplitude "VP" of voltage induced between second nodes AC1 an AC0 is larger than the threshold voltage "VT" (approximately 300mV for example) of the low threshold elements nMOS it includes.

On a first stage node VCP1 a difference "VP-VT" between the peak amplitude voltage VP and the threshold voltage VT is established, on VCP2 this voltage "VP-VT" is doubled, on VCP it is tripled.

In addition, it is advantageous that the switching elements T0, T1 and T01 of the switching circuit are embodied by native transistors, because in such a case, the short between the first nodes AC1_TX, AC0_TX takes place at a lower voltage elevated control VCP.

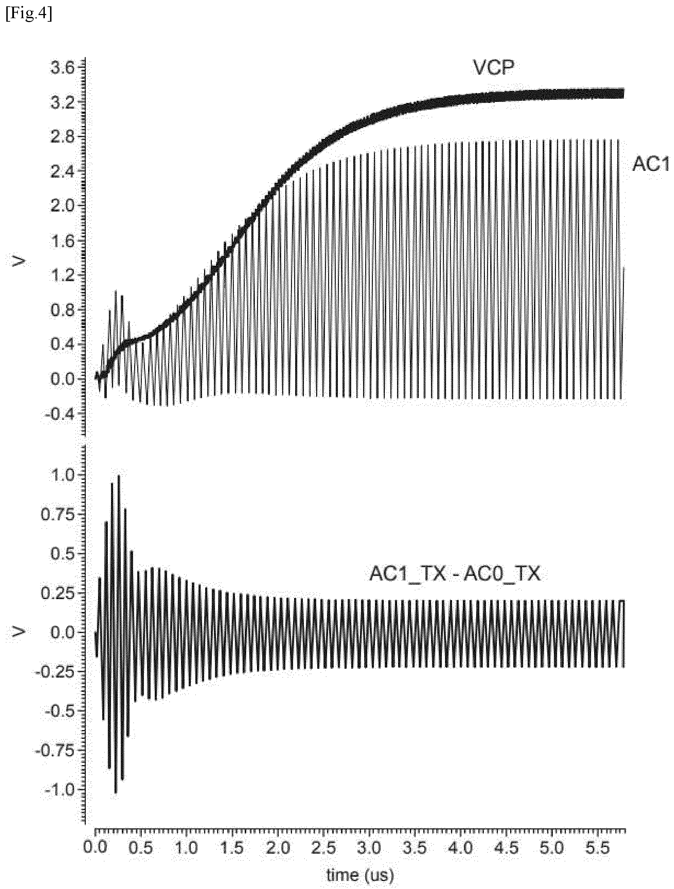

Figure 4 illustrates results of an example implementation of the passive mode start-up procedure STUP operated by the front-end circuit AFE described above.

In this implementation, the antenna inductance value is 250nH, the parallel capacitance CP is set to 440pF and the serial capacitance values CS/2 are set to 110pF (CS1=CS0=220pF), in order to establish a resonant (tuned) frequency at 13.56 MHz, when the antenna tank LCTK in the tuned state.

Parallel resistance RP was set so that the Q factor of antenna tank LCTK when in tuned state is 20. In determination of Q factor the resistance of the "short" between the first nodes AC0_TX and AC1_TX is taken in account.

Initial resonance when the antenna tank LCTK in the detuned state, approximately between 0.0 and 0.4 µs in this example graph, is at 15.2MHz, working Q factor at Fc=13.56MHz is 3.7 in detuned state.

Initial induced voltage on the second nodes AC0, AC1 is sufficient to start the charge pump circuit CP building the elevated voltage VCP.

As the elevated voltage VCP increases, approximately between 0.4 µs and 2.0 µs in this example graph, the voltage on the first nodes AC1_TX-AC0_TX starts to fall, the amplitude AC1 on the antenna terminals increases as the contribution of the serial capacitors CS0, CS1 increases in the resonance frequency of the antenna tank LCTK.

Eventually, approximately after 2.0 µs or 2.5 µs, the tuned state has been established, resonating at Fc = 13.56 MHz and providing a sufficient induced voltage to generate the rectified passive mode supply voltage VREC supplying the in passive mode operations, such as passive load modulation PLM.

Fig.5 schematically illustrates a transponder device DVC, including a contactless communication system SYS as described above in relation to figures 2 to 4.

The transponder device DVC can be for instance a computer such as a smartphone or a pad or any connected device.

The transponder device DVC thus includes an "RFID" tag integrated circuit as the system SYS, which supports active and passive operating modes. In active operating mode, the system is supplied by an external supply source SUPP, for instance a battery, and it communicates to a reader using active load modulation. In passive operating mode, the system extracts power from signal induced on its antenna terminals FLD and communicates to a reader using passive load modulation. This integrated circuit SYS includes an antenna tank LCTK which has the same resonant frequency Fc in active mode and passive mode, after the start-up procedure STUP using a charge pump to short the transmission driver nodes in passive mode.

## Claims

1. A contactless communication system (SYS) comprising a front-end circuit (AFE) capable to operate either in an active mode or in a passive mode, the system including:
- a tank circuit (LCTK) including an antenna coil (LANT) and serial capacitors (CSO, CS1) in series between first nodes (AC0_TX, AC1_TX) and second nodes (ACO, AC1) on the antenna coil terminals;
- a transmission stage (TX) coupled on the first nodes (AC0_TX, AC1_TX) and configured to leave the voltage floating on the first nodes in passive mode, and a reception stage (RX) coupled on the second nodes (ACO, AC1);
- a passive mode start-up circuit (STUP) including a switching circuit (T0, T1, T01) capable, in a commuted state, to settle the voltage on the first nodes (AC0_TX, AC1_TX), and a charge pump circuit (CP) configured to elevate the voltage from the second nodes (ACO, AC1) up to a control voltage (VCP) controlling the switching circuit to the commuted state.

2. The system according to claim 1, wherein the tank circuit (LCTK) includes in addition a parallel capacitor (CP) parallelly coupled on the antenna coil (LANT) terminals, the capacitance values of each serial capacitors (CSO, CS1) representing a part less or equal than 50% of the capacitance involving the value of tuned frequency.

3. The system according to any of claims 1 or 2, wherein the tank circuit (LCTK) is configured in a tuned state resonating at a tuned frequency when the voltage on the first nodes (AC0_TX, AC1_TX) is settled and not left floating; and configured in a detuned state resonating at a detuned frequency when the voltage on the first nodes (AC0_TX, AC1_TX) is left floating and not settled.

4. The system according to claim 3, wherein the tuned frequency is a carrier frequency of a contactless communication, and the detuned frequency is less than 50% different than the tuned frequency.

5. The system according to any of claims 3 or 4, wherein the reception stage (RX) is capable to generate a passive mode supply voltage (VREC) from an external source retrieved on the second nodes (ACO, AC1), if the tank circuit (LCTK) is in the tuned state.

6. The system according to any of claims 3 to 5, wherein passive mode start-up circuit (STUP) is configured to enable the charge pump circuit (CP) operation during a start-up period in passive mode when the tank circuit (LCTK) is in the detuned state and during the passive mode operation to maintain the switching circuit in the commuted state, and to disable the charge pump circuit (CP) operations in active mode.

7. The system according to any of claims 1 to 6, wherein the passive mode start-up circuit (STUP) includes native MOS transistors (nMOS) in the switching circuit (T0, T1, T01) or in the charge pump circuit (CP).

8. Transponder device (DVC), including a contactless communication system (SYS) according to any of claims 1 to 7.

9. A contactless communication method operating a front-end circuit (AFE) either in an active mode or in a passive mode, the front end circuit including a tank circuit (LCTK) including an antenna coil (LANT) and serial capacitors (CSO, CS1) in series between first nodes (AC0_TX, AC1_TX) and second nodes (ACO, AC1) on the antenna coil terminals, a transmission stage (TX) coupled on the first nodes (AC0_TX, AC1_TX) and a reception stage (RX) coupled on the second nodes (ACO, AC1);
the method comprising:
- leaving the voltage floating on the first nodes (AC0_TX, AC1_TX) in passive mode;
- a passive mode start-up procedure (STUP) including elevating the voltage from the second nodes (ACO, AC1), with a charge pump circuit (CP), up to a control voltage (VCP) controlling a switching circuit (T0, T1, T01) in a commuted state that settles the voltage on the first nodes (AC0_TX, AC1_TX).

10. The method according to claim 9, wherein the tank circuit (LCTK) includes in addition a parallel capacitor (CP) parallelly coupled on the antenna coil (LANT) terminals, the capacitance values of each serial capacitors (CSO, CS1) representing a part less or equal than 50% of the capacitance involving the value of tuned frequency.

11. The method according to any of claims 9 or 10, wherein, when the voltage on the first nodes (AC0_TX, AC1_TX) is settled and not left floating, the tank circuit (LCTK) is in a tuned state and resonates at a tuned frequency; and, when the voltage on the first nodes (AC0_TX, AC1_TX) is left floating and not settled, the tank circuit (LCTK) is in a detuned state and resonates at a detuned frequency.

12. The method according to claim 11, wherein the tuned frequency is a carrier frequency of the contactless communication, and the detuned frequency is less than 50% different than the tuned frequency.

13. The method according to any of claims 11 or 12, wherein a passive mode supply voltage (VREC) is generated by the reception stage (RX) from an external source retrieved on the second nodes (ACO, AC1), if the tank circuit (LCTK) is in the tuned state.

14. The method according to any of claims 11 to 13, wherein the passive mode start-up procedure (STUP) enables the charge pump (CP) to operate during a start-up period in passive mode when the tank circuit is in the detuned state and during the passive mode operation to maintain the switching circuit in the commuted state, and disables the charge pump (CP) to operate in active mode.

15. The method according to any of claims 9 to 14, wherein native MOS transistors (nMOS) are used in the switching circuit (T0, T1, T01) or in the charge pump circuit (CP).

## Amended claims

### Amended claims in accordance with Rule 137(2) EPC.

1. A contactless communication system (SYS) comprising a front-end circuit (AFE) capable to operate either in an active mode or in a passive mode, **characterized in that** the system includes:
- a tank circuit (LCTK) including an antenna coil (LANT) and serial capacitors (CSO, CS1) in series between first nodes (AC0_TX, AC1_TX) and second nodes (ACO, AC1) on the antenna coil terminals;
- a transmission stage (TX) coupled on the first nodes (AC0_TX, AC1_TX) and configured to leave the voltage floating on the first nodes in passive mode, and a reception stage (RX) coupled on the second nodes (ACO, AC1);
- a passive mode start-up circuit (STUP) including a switching circuit (T0, T1, T01) capable, in a commuted state, to settle the voltage on the first nodes (AC0_TX, AC1_TX), and a charge pump circuit (CP) configured to elevate the voltage from the second nodes (ACO, AC1) up to a control voltage (VCP) controlling the switching circuit to the commuted state, wherein the tank circuit (LCTK) is configured in a tuned state resonating at a tuned frequency when the voltage on the first nodes (AC0_TX, AC1_TX) is settled and not left floating; and configured in a detuned state resonating at a detuned frequency when the voltage on the first nodes (AC0_TX, AC1_TX) is left floating and not settled.

2. The system according to claim 1, wherein the tank circuit (LCTK) includes in addition a parallel capacitor (CP) parallelly coupled on the antenna coil (LANT) terminals, the capacitance values of each serial capacitors (CSO, CS1) representing a part less or equal than 50% of the capacitance involving the value of tuned frequency.

3. The system according to claim 2, wherein the tuned frequency is a carrier frequency of a contactless communication, and the detuned frequency is less than 50% different than the tuned frequency.

4. The system according to any of claims 2 or 3, wherein the reception stage (RX) is capable to generate a passive mode supply voltage (VREC) from an external source retrieved on the second nodes (ACO, AC1), if the tank circuit (LCTK) is in the tuned state.

5. The system according to any of claims 2 to 4, wherein passive mode start-up circuit (STUP) is configured to enable the charge pump circuit (CP) operation during a start-up period in passive mode when the tank circuit (LCTK) is in the detuned state and during the passive mode operation to maintain the switching circuit in the commuted state, and to disable the charge pump circuit (CP) operations in active mode.

6. The system according to any of claims 1 to 5, wherein the passive mode start-up circuit (STUP) includes native MOS transistors (nMOS) in the switching circuit (T0, T1, T01) or in the charge pump circuit (CP).

7. Transponder device (DVC), including a contactless communication system (SYS) according to any of claims 1 to 6.

8. A contactless communication method operating a front-end circuit (AFE) either in an active mode or in a passive mode, the front end circuit including a tank circuit (LCTK) including an antenna coil (LANT) and serial capacitors (CSO, CS1) in series between first nodes (AC0_TX, AC1_TX) and second nodes (ACO, AC1) on the antenna coil terminals, a transmission stage (TX) coupled on the first nodes (AC0_TX, AC1_TX) and a reception stage (RX) coupled on the second nodes (ACO, AC1);
the method comprising:
- leaving the voltage floating on the first nodes (AC0_TX, AC1_TX) in passive mode;
- a passive mode start-up procedure (STUP) including elevating the voltage from the second nodes (ACO, AC1), with a charge pump circuit (CP), up to a control voltage (VCP) controlling a switching circuit (T0, T1, T01) in a commuted state that settles the voltage on the first nodes (AC0_TX, AC1_TX).

9. The method according to claim 8, wherein the tank circuit (LCTK) includes in addition a parallel capacitor (CP) parallelly coupled on the antenna coil (LANT) terminals, the capacitance values of each serial capacitors (CSO, CS1) representing a part less or equal than 50% of the capacitance involving the value of tuned frequency.

10. The method according to any of claims 8 or 9, wherein, when the voltage on the first nodes (AC0_TX, AC1_TX) is settled and not left floating, the tank circuit (LCTK) is in a tuned state and resonates at a tuned frequency; and, when the voltage on the first nodes (AC0_TX, AC1_TX) is left floating and not settled, the tank circuit (LCTK) is in a detuned state and resonates at a detuned frequency.

11. The method according to claim 10, wherein the tuned frequency is a carrier frequency of the contactless communication, and the detuned frequency is less than 50% different than the tuned frequency.

12. The method according to any of claims 10 or 11, wherein a passive mode supply voltage (VREC) is generated by the reception stage (RX) from an external source retrieved on the second nodes (ACO, AC1), if the tank circuit (LCTK) is in the tuned state.

13. The method according to any of claims 10 to 12, wherein the passive mode start-up procedure (STUP) enables the charge pump (CP) to operate during a start-up period in passive mode when the tank circuit is in the detuned state and during the passive mode operation to maintain the switching circuit in the commuted state, and disables the charge pump (CP) to operate in active mode.

14. The method according to any of claims 8 to 13, wherein native MOS transistors (nMOS) are used in the switching circuit (T0, T1, T01) or in the charge pump circuit (CP).
